# EUROPEAN PATENT APPLICATION

(11) **EP 4 657 534 A1**
(43) Date of publication of application: **03.12.2025**
(21) Application number: 24747130.3
(22) Date of filing: 12.01.2024
(51) Int. Cl.: H01M 4/04, B65H 5/06, B65H 20/02, H01M 4/139

(54) **CONVEYING APPARATUS FOR MIXTURE SHEET**

(30) Priority: 24.01.2023 JP 2023008695
(71) Applicant: Panasonic Intellectual Property Management Co., Ltd., Kadoma-shi, Osaka 571-0057 (JP)
(72) Inventor: TSURUTA, Yuki, Kadoma-shi, Osaka 571-0057 (JP); TAKAYAMA, Yosuke, Kadoma-shi, Osaka 571-0057 (JP); FUKUMOTO, Yusuke, Kadoma-shi, Osaka 571-0057 (JP); MAEDA, Satoru, Kadoma-shi, Osaka 571-0057 (JP); KUROMIYA, Takao, Kadoma-shi, Osaka 571-0057 (JP)
(74) Representative: Eisenführ Speiser
(86) International application number: PCT/JP2024/000563
(87) International publication number: WO 2024/157799

(57) **Abstract**

A conveying apparatus 1 is provided with a first roll 2 and a second roll 4 that turn while holding therebetween a mixture sheet 6 of a dry electrode mixture 8 and thus convey the mixture sheet 6. A first circumferential surface 2a of the first roll 2 has a first surface roughness. A second circumferential surface 4a of the second roll 4 has a second surface roughness greater than the first surface roughness. The second roll 4 is positioned downstream of the first roll 2 in the conveyance direction of the mixture sheet 6 and conveys, while supporting with the second circumferential surface 4a, the mixture sheet 6 having passed through a gap G between the first roll 2 and the second roll 4.

## Description

### TECHNICAL FIELD

The present disclosure relates to a conveyer apparatus for a compound sheet.

### BACKGROUND ART

Patent Literature 1 describes an apparatus for conveying a compound sheet obtained by molding a wet electrode compound by means of a plurality of rolls.

### RELATED-ART LITERATURE

### PATENT LITERATURE

[Patent Literature 1] JP2015-164717

### SUMMARY OF INVENTION

### TECHNICAL PROBLEM

We have studied applying such a conveying process to a compound sheet of a dry electrode compound having a solvent content less than that of the wet type. We found that conveyance stability can be reduced in the case of conveying a dry compound sheet as compared to the case of conveying a wet compound sheet.

The present disclosure addresses the issue described above, and a purpose thereof is to provide a technology for improving the conveyance stability of a compound sheet.

### SOLUTION TO PROBLEM

An embodiment of the present disclosure relates to a conveyer apparatus for a compound sheet. The apparatus includes a first roll and a second roll that convey a compound sheet obtained by molding a dry electrode compound into a sheet shape, by sandwiching the compound sheet between the first roll and the second roll and rotating. A first circumferential surface of the first roll has a first surface roughness. A second circumferential surface of the second roll has a second surface roughness greater than the first surface roughness. The second roll is disposed further downstream in a conveying direction of the compound sheet than the first roll, and the compound sheet passing through a gap between the first roll and the second roll is supported and conveyed by the second circumferential surface.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, the conveyance stability of a compound sheet can be improved.

### BRIEF DESCRIPTION OF DRAWINGS

[Fig. 1] Fig. 1 is a schematic diagram of a conveyer apparatus for a compound sheet according to the embodiment.
[Fig. 2] Fig. 2 is a schematic diagram of the conveyer apparatus according to a variation.
[Fig. 3] Fig. 3 shows conditions in and evaluation results of the transport apparatus according to each embodiment and each comparative example.

### DESCRIPTION OF EMBODIMENTS

Hereinafter, the present disclosure will be described based on a preferred embodiment with reference to the accompanying drawings. The embodiment is not intended to limit the scope of the present disclosure but exemplify the present disclosure. Not all of the features and the combinations thereof described in the embodiment are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

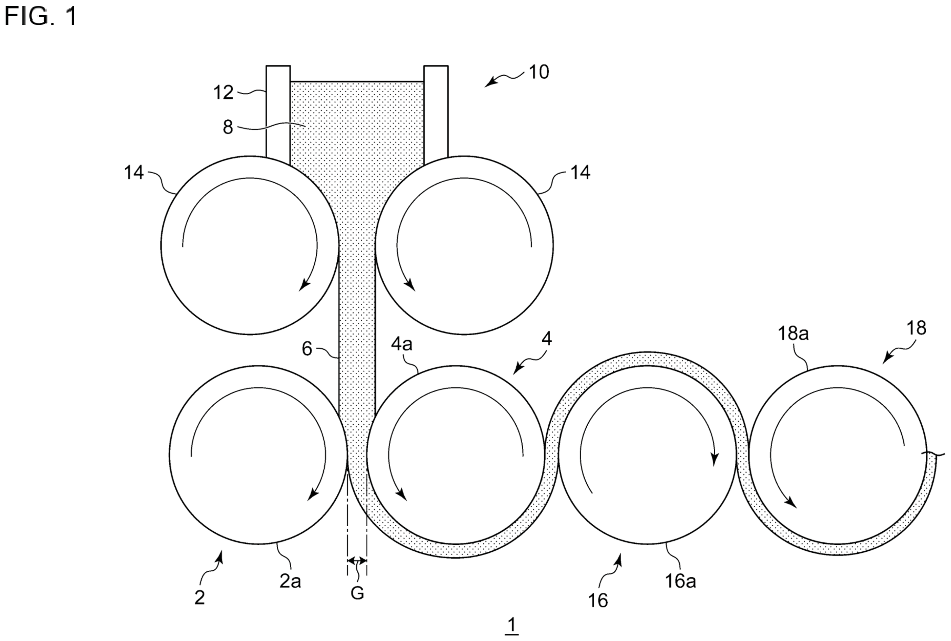

Fig. 1 is a schematic diagram of a conveyer apparatus 1 for a compound sheet 6 according to the embodiment. The conveyer apparatus 1 for the compound sheet 6 (hereinafter abbreviated as "conveyer apparatus 1" as appropriate) includes a first roll 2 and a second roll 4. The first roll 2 and the second roll 4 are oriented such that the respective rotation axes are parallel to each other, and the rolls are adjacent to each other at a predetermined interval. Further, the second roll 4 is disposed further downstream in the conveying direction of the compound sheet 6 than the first roll 2.

The compound sheet 6 is guided through the gap between the first roll 2 and the second roll 4. The compound sheet 6 is obtained by compression-molding a powdery or particulate dry electrode compound 8 that is a raw material into a sheet shape. By way of one example, the compound sheet 6 is supplied from a molding apparatus 10 to the gap between the first roll 2 and the second roll 4. The molding apparatus 10 includes a reservoir 12 and a pair of molding rolls 14. The reservoir 12 is, for example, a known hopper and stores the dry electrode compound 8.

The pair of molding rolls 14 are disposed at the powder outlet of the reservoir 12. The pair of molding rolls 14 are oriented such that the respective rotation axes are parallel to each other, and the rolls are adjacent to each other at a predetermined interval. The pair of molding rolls 14 carry the dry electrode compound 8 in the reservoir 12 on their respective circumferential surfaces and supply it to the gap between the two molding rolls. Therefore, the pair of molding rolls 14 also function as feed rolls. The pair of molding rolls 14 rotate in mutually opposite directions to compress the dry electrode compound 8 supplied to the gap into a sheet shape. Thereby, the compound sheet 6 is molded. The compound sheet 6 is continuously fed from the gap between the pair of molding rolls 14. Therefore, the compound sheet 6 is a strip elongated in the conveying direction. The configuration of the molding apparatus 10 is not limited to the one described above.

The dry electrode compound 8 includes an electrode active material and a binder. The dry electrode compound also includes a conductive agent and a solvent as necessary. The binder and the solvent function as binder content that binds the electrode active materials to each other. **In** the case of a general lithium ion secondary battery, the electrode active material is lithium cobalt oxide, lithium iron phosphate, etc. in the case of a positive electrode and is graphite, etc. in the case of a negative electrode. The conductive agent is graphite, carbon black, acetylene black, etc. The binder is polytetrafluoroethylene (PTFE), polyvinylidene fluoride (PVdF), etc.

**In** the case the dry electrode compound 8 is used for the negative electrode, the solvent is exemplified by water; alcohols such as ethanol; N-methylpyrrolidone (NMP); toluene; dimethyl carbonate (DMC), ethyl methylcarbonate (EMC), etc. In the case the dry electrode compound 8 is used for the positive electrode, the solvent is exemplified by amine-based solvent such as N, N-dimethylaminopropylamine, diethylenetriamine, etc.; ether-based solvent such as tetrahydrofuran; ketone-based solvent such as methyl ethyl ketone; ester-based solvent such as methyl acetate; amide solvent such as dimethylacetamide and N-methyl-2-pyrrolidone, etc.

The term "dry" in the embodiment means that the solvent content is 5% by mass or less with respect to the total mass of the dry electrode compound 8. The solvent content may be 3% by mass or less, 0.1% by mass, or substantially 0% by mass with respect to the total mass of the dry electrode compound 8. By using the dry electrode compound 8, a drying furnace for drying the compound sheet 6 can be simplified or omitted.

The first roll 2 and the second roll 4 can convey the compound sheet 6 by sandwiching the compound sheet 6 between the rolls and rotating in mutually opposite directions. The compound sheet 6 passes through the gap between the first roll 2 and the second roll 4 and is then supported and conveyed by a second circumferential surface 4a.

The circumferential surface of the first roll 2 (hereinafter referred to as the first circumferential surface 2a as appropriate) and the circumferential surface of the second roll 4 (hereinafter referred to as the second circumferential surface 4a as appropriate) differ from each other in surface roughness, i.e., degree of surface roughness. Specifically, the first circumferential surface 2a has a first surface roughness, and the second circumferential surface 4a has a second surface roughness greater than the first surface roughness. Configuring the surface roughness of the second circumferential surface 4a to be greater than the surface roughness of the first circumferential surface 2a makes it easier to carry the compound sheet 6 on the second circumferential surface 4a. In other words, the compound sheet 6 can be easily transferred to the second circumferential surface 4a. This can improve the conveyance stability of the compound sheet 6 in the conveying device 1.

"Surface roughness" in the embodiment is the arithmetic average roughness Ra defined in JISB06012001. However, surface roughness is not limited to Ra and may be any other known index such as maximum height roughness Rz. In other words, the roughness of the second circumferential surface 4a may be greater than the roughness of the first circumferential surface 2a in terms of any of these roughness indices.

Further, the gap G between the first roll 2 and the second roll 4 by way of one example is set to be smaller than the thickness of the compound sheet 6 supplied from the molding apparatus 10. The magnitude of the gap G in the embodiment is the distance between the two circumferential surfaces at the position where the first circumferential surface 2a and the second circumferential surface 4a are closest to each other. With such a setting of the gap G, the first roll 2 and the second roll 4 can convey and concurrently stretch the compound sheet 6. **In** other words, the first roll 2 and the second roll 4 also function as stretching rolls.

**In** further accordance with the embodiment, the first roll 2 rotates at the first circumferential speed, and the second roll 4 rotates at the second circumferential speed equal to or faster than the first circumferential speed. More preferably, the second circumferential speed is faster than the first circumferential speed. The compound sheet 6 can also be stretched by the circumferential speed like this. Further, the stretching of the compound sheet 6 can also be realized by configuring the second surface roughness to be greater than the first surface roughness. The stretching of the compound sheet 6 by the first roll 2 and the second roll 4 can be realized by at least one of the gap G, the circumferential speed difference, and the surface roughness difference. A combination of two or more makes it easier to stretch the compound sheet 6. In other words, the stretchability of the compound sheet 6 can be improved.

Instead of the pair of molding rolls 14, the first roll 2 and the second roll 4 may be provided at the powder outlet of the reservoir 12. In this case, the dry electrode compound 8 is directly supplied to the gap G between the first roll 2 and the second roll 4. The dry electrode compound 8 is then compressed into a sheet shape by the first roll 2 and the second roll 4, and the compound sheet 6 is molded. In other words, the first roll 2 and the second roll 4 can also be caused to function as molding rolls.

The difference between the first surface roughness and the second surface roughness is preferably 0.05 µm or more and 2 µm or less. This can improve the stretchability of the compound sheet 6. Further, the second surface roughness is preferably less than 1/5 of the gap G between the first roll 2 and the second roll 4. The second surface roughness in this case is the arithmetic average roughness Ra. This can improve the stretchability of the compound sheet 6. Further, in the case the first roll 2 and the second roll 4 also function as molding rolls, it is possible to suppress the creation of cracks or damages in the compound sheet 6. In other words, the moldability of the compound sheet 6 can also be improved. In particular, the moldability at the end in the width direction of the compound sheet 6, i.e., in the direction perpendicular to the conveying direction, can be enhanced. In the case the compound sheet 6 is supplied to the gap between the first roll 2 and the second roll 4, the moldability is determined according to whether cracks or damages are created in the compound sheet 6 that has passed through the gap between the two rolls.

The conveyer apparatus 1 of the embodiment includes a third roll 16 and a fourth roll 18 on the downstream side of the second roll 4. The third roll 16 and the fourth roll 18 function as conveyance rolls in the same way as the first roll 2 and the second roll 4. The fourth roll 18 is disposed further downstream in the conveying direction of the compound sheet 6 than the third roll 16.

The second roll 4 and the third roll 16 are oriented such that the respective rotation axes are parallel to each other, and the rolls are adjacent to each other at a predetermined interval. The compound sheet 6 is supported and conveyed by the second circumferential surface 4a and is fed to the gap between the second roll 4 and the third roll 16. The second roll 4 and the third roll 16 can convey the compound sheet 6 downstream by sandwiching the compound sheet 6 between the rolls and rotating in mutually opposite directions. The compound sheet 6 supported by the second circumferential surface 4a is delivered to the circumferential surface (hereinafter, referred to as a third circumferential surface 16a as appropriate) of the third roll 16, is supported by the third circumferential surface 16a, and is conveyed to the downstream side.

The third roll 16 and the fourth roll 18 are oriented such that the respective rotation axes are parallel to each other, and the rolls are adjacent to each other at a predetermined interval. The compound sheet 6 is supported and conveyed by the third circumferential surface 16a and is fed to the gap between the third roll 16 and the fourth roll 18. The third roll 16 and the fourth roll 18 can convey the compound sheet 6 downstream by sandwiching the compound sheet 6 between the rolls and rotating in mutually opposite directions. The compound sheet 6 supported by the third circumferential surface 16a is delivered to the circumferential surface (hereinafter, referred to as a fourth circumferential surface 18a as appropriate) of the fourth roll 18, is supported by the fourth circumferential surface 18a, and is conveyed to the downstream side.

Preferably, the third circumferential surface 16a has a third surface roughness greater than the second surface roughness. This makes it easy to transfer the compound sheet 6 from the second circumferential surface 4a to the third circumferential surface 16a. Preferably, the fourth circumferential surface 18a has a fourth surface roughness greater than the third surface roughness. This makes it easy to transfer the compound sheet 6 from the third circumferential surface 16a to the fourth circumferential surface 18a. In other words, the conveyance stability of the compound sheet 6 can be improved by increasing the surface roughness of the circumferential surface of the downstream conveyance roll.

The third roll 16 and the fourth roll 18 may also function as stretching rolls. In this case, at least one of the gap G, the circumferential speed difference, and the surface roughness difference of the second roll 4 and the third roll 16 is set in the same manner as in the case of the first roll 2 and the second roll 4, taking into account the thickness of the compound sheet 6 that is fed, etc. Further, at least one of the gap G, the circumferential speed difference, and the surface roughness difference of the third roll 16 and the fourth roll 18 is set in the same manner as in the case of the first roll 2 and the second roll 4, taking into account the thickness of the compound sheet 6 that is fed, etc.

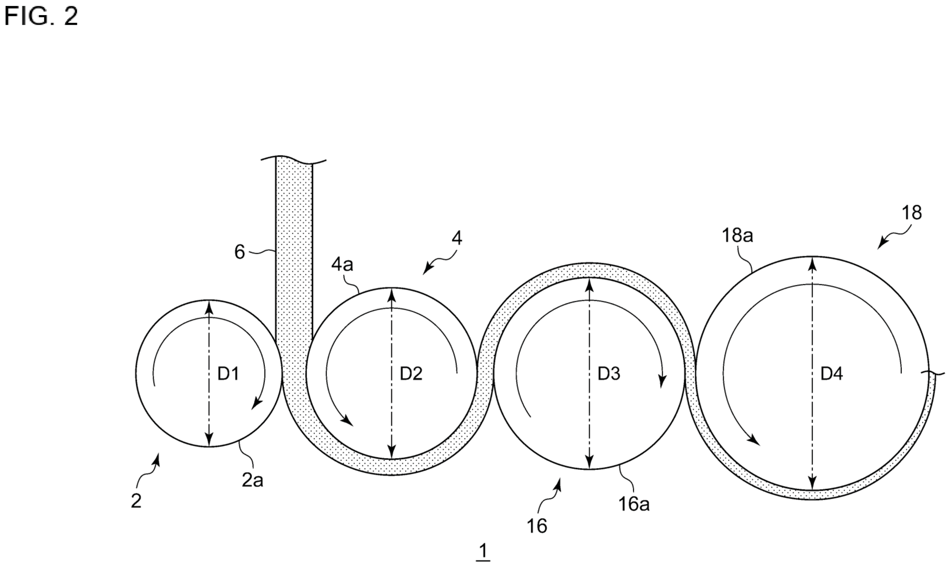

Fig. 1 shows the first roll 2-the fourth roll 18 having the same diameter, but the diameters of the rolls may be different. Fig. 2 is a schematic diagram of the conveyer apparatus 1 according to a variation. As shown in Fig. 2, for example, the first roll 2 has a first diameter D1, and the second roll 4 has a second diameter D2 equal to or greater than the first diameter D1. Preferably, the second diameter D2 is greater than the first diameter D1. Further, the third roll 16 has a third diameter D3 equal to or greater than the second diameter D2 and, preferably, greater than the second diameter D2. Further, the fourth roll 18 has a fourth diameter D4 equal to or greater than the third diameter D3 and, preferably, greater than the third diameter D3. In other words, in the conveyer apparatus 1 according to the variation, the diameter of the conveyance roll progressively increases toward the downstream side.

According to such a configuration, the change in curvature of the compound sheet 6 created when the compound sheet 6 is delivered from the circumferential surface of the upstream roll to the circumferential surface of the downstream roll can be reduced. Therefore, the stress exerted on the compound sheet 6 can be reduced, and damages to the compound sheet 6 can be suppressed. Therefore, the moldability of the compound sheet 6 can be improved.

In another variation, the conveyor apparatus 1 may include at least the first roll 2 and the second roll 4 as conveyance rolls, and the third roll 16 and the fourth roll 18 may be omitted. The number of conveyance rolls may be three or five or more. Alternatively, a conveyance roll may be provided further upstream than the first roll 2. In this case, the compound sheet 6 supported and conveyed by the first circumferential surface 2a is fed to the gap between the first roll 2 and the second roll 4.

Further, all of the plurality of conveyance rolls may be provided with a stretching function, or only some of the conveyance rolls may be provided with a stretching function. Further, the plurality of conveyance rolls may be arranged such that the respective shaft centers are disposed on the same plane or may be arranged such that the respective shaft centers are disposed on different planes. Further, Fig. 1 shows how the compound sheet 6 is supplied from vertically above the first roll 2 and the second roll 4, but the compound sheet 6 may be supplied to the gap between the first roll 2 and the second roll 4 in the horizontal direction or obliquely.

A compression treatment may be applied to the compound sheet 6 conveyed by the conveyer apparatus 1. For example, a pair of pressurizing rolls are provided on the downstream side of the fourth roll 18. The compound sheet 6 supported and conveyed by the fourth circumferential surface 18a is then supplied to the gap between the pair of pressurizing rolls and compressed by the pair of pressurizing rolls. Further, the compound sheet 6 may be laminated on a sheet member such as a current collector foil. For example, a lamination roll for conveying the sheet member is provided at a position facing the fourth roll 18, and the compound sheet 6 supported by the fourth circumferential surface 18a is laminated on the sheet member supported by the circumferential surface of the lamination roll. **In** the case the third roll 16 and the fourth roll 18 are omitted, a pressurized roll or a lamination roll may be provided for the second roll 4. Further, the pressurizing roll may be provided on the upstream side of the lamination roll, or the lamination roll may be provided on the upstream side of the pressurized roll.

As described above, the conveyer apparatus 1 according to the embodiment includes the first roll 2 and the second roll 4 that sandwich and transport the compound sheet 6. The second roll 4 provided on the downstream side of the first roll 2 has the second circumferential surface 4a having a greater surface roughness than the first circumferential surface 2a of the first roll 2. Thus, the transferability of the compound sheet 6 to the downstream roll can be improved by configuring the surface roughness of the downstream roll to be greater than the surface roughness of the upstream roll. Therefore, the conveyance stability of the compound sheet 6 can be improved.

In particular, the dry electrode compound 8 has a lower adhesiveness to the roll circumferential surface than the wet electrode compound, i.e., than in the case the solvent content is more than 5% by mass. For this reason, it is not easy to transfer the compound sheet 6 having passed through the gap between the first roll 2 and the second roll 4 to the second circumferential surface 4a. Therefore, the conveyer apparatus 1 of the embodiment can effectively exhibit its function particularly when the electrode compound is of a dry type. The conveyance stability of the compound sheet 6 can be improved according to the embodiment even when the electrode compound is of a wet type.

The embodiment of the present disclosure has been described above in detail. The embodiment described above is merely a specific example of practicing the present disclosure. The details of the embodiment shall not be construed as limiting the technical scope of the present disclosure. A number of design modifications such as modification, addition, deletion, etc. of constituting elements may be made to the extent that they do not depart from the idea of the present disclosure defined by the claims. New embodiments with design modifications will provide the combined advantages of the embodiment and the variation. Although the details subject to such design modification are emphasized in the embodiment by using phrases such as "of the embodiment" and "in the embodiment", details not referred to as such are also subject to design modification. Any combination of constituting elements included in the embodiment is also useful as an embodiment of the present disclosure. Hatching in the cross section in the drawings should not be construed as limiting the material of the hatched object.

The embodiments may be defined by the following items.

### [Item 1]

A conveyer apparatus (1) for a compound sheet, including:
a first roll (2) and a second roll (4) that convey a compound sheet (6) obtained by molding a dry electrode compound (8) into a sheet shape, by sandwiching the compound sheet (6) between the first roll (2) and the second roll (4) and rotating,
wherein a first circumferential surface (2a) of the first roll (2) has a first surface roughness,
wherein a second circumferential surface (4a) of the second roll (4) has a second surface roughness greater than the first surface roughness, and
wherein the second roll (4) is disposed further downstream in a conveying direction of the compound sheet (6) than the first roll (2), and the compound sheet (6) passing through a gap between the first roll (2) and the second roll (4) is supported and conveyed by the second circumferential surface (4).

### [Item 2]

The conveyer apparatus according to Item 1,
wherein the second surface roughness is less than 1/5 of the gap (G) between the first roll (2) and the second roll (4).

### [Item 3]

The conveyer apparatus (1) according to Item 1 or 2,
wherein a difference between the first surface roughness and the second surface roughness is 0.05 µm or more and 2 µm or less.

### [Item 4]

The conveyer apparatus (1) according to any one of Items 1 through 3,
wherein the first roll (2) rotates at a first circumferential speed, and
wherein the second roll (4) rotates at a second circumferential speed equal to or faster than the first circumferential speed.

### [Item 5]

The conveyer apparatus (1) according to any one of Items 1 through 4,
wherein the first roll (2) has a first diameter (D1), and
wherein the second roll (4) has a second diameter (D2) equal to or greater than the first diameter (D1).

### Exemplary embodiments

Hereinafter, an exemplary embodiment of the present invention will be described, but the exemplary embodiment is merely examples for suitably describing the present invention and shall not be interpreted as limiting the present invention in any way.

### (Exemplary embodiment 1)

A dry electrode compound was prepared by mixing a positive electrode active material, a conductive material, and PTFE as a binder. The amount of the conductive material mixed is 0.9 parts by mass with respect to 100 parts by mass of the positive electrode active material. The amount of the binder mixed is 0.8 parts by mass with respect to 100 parts by mass of the positive electrode active material. Further, a first roll having the first surface roughness (Ra) of 2 µm and the second roll having the second surface roughness (Ra) of 5 µm and a diameter smaller than the first roll were prepared to configure a conveyer apparatus. Therefore, the difference between the first surface roughness and the second surface roughness is 3 µm. Further, the ratio of the second diameter to the first diameter is less than 1 (specifically, the first diameter is 100 mm, and the second diameter is 70 mm).

Subsequently, the two rolls were arranged so that the second surface roughness is 1/4 of the gap between the first roll and the second roll. In other words, the gap between the two rolls was set to 20 µm. The first roll and the second roll were then rotated in mutually opposite directions, and a dry electrode compound was supplied to the gap between the two. In this process, the second roll was rotated at a speed lower than the first roll. Therefore, the ratio of the second circumferential speed to the first circumferential speed is less than 1 (specifically, the first circumferential speed is 5 m/min, and the second circumferential speed is 4 m/min).

### (Exemplary embodiment 2)

The test was performed in the same manner as in Exemplary embodiment 1 except for the following points. A difference from Exemplary embodiment 1 is that the first surface roughness (Ra) is 9 µm, and the second surface roughness (Ra) is 10 µm. Therefore, the difference between the first surface roughness and the second surface roughness is 1 µm. Further, the ratio of the second diameter to the first diameter is 1 or more (specifically, the first diameter is 70 mm and the second diameter is 100 mm). Further, the gap between the two rolls is 40 µm. Therefore, the second surface roughness is 1/4 of the gap between the first roll and the second roll. Further, the ratio of the second circumferential speed to the first circumferential speed is 1 or more (specifically, the first circumferential speed is 5 m/minute, and the second circumferential speed is 6 m/min).

### (Exemplary embodiment 3)

The test was performed in the same manner as in Exemplary embodiment 1 except for the following points. A difference from Exemplary embodiment 1 is that the first surface roughness (Ra) is 0.5 µm, and the second surface roughness (Ra) is 2.5 µm. Therefore, the difference between the first surface roughness and the second surface roughness is 2 µm. Further, the second surface roughness is less than 1/5 of the gap between the first roll and the second roll (specifically, the gap between the two rolls is 1500 µm). Further, the ratio of the second circumferential speed to the first circumferential speed is 1 or more (specifically, the first circumferential speed is 5 m/minute, and the second circumferential speed is 6 m/min).

### (Exemplary embodiment 4)

The test was performed in the same manner as in Exemplary embodiment 1 except for the following points. A difference from Exemplary embodiment 1 is that the ratio of the second diameter to the first diameter is 1 or more (specifically, the first diameter is 70 mm and the second diameter is 100 mm). Further, the second surface roughness is less than 1/5 of the gap between the first roll and the second roll (specifically, the gap between the two rolls is 30 µm). Further, the ratio of the second circumferential speed to the first circumferential speed is 1 or more (specifically, the first circumferential speed is 5 m/minute, and the second circumferential speed is 5 m/min).

### (Exemplary embodiment 5)

The test was performed in the same manner as in Exemplary embodiment 1 except for the following points. A difference from Exemplary embodiment 1 is that the first surface roughness (Ra) is 0.5 µm, and the second surface roughness (Ra) is 2.5 µm. Therefore, the difference between the first surface roughness and the second surface roughness is 2 µm. Further, the ratio of the second diameter to the first diameter is 1 or more (specifically, the first diameter is 100 mm, and the second diameter is 100 mm). Further, the second surface roughness is less than 1/5 of the gap between the first roll and the second roll (specifically, the gap between the two rolls is 500 µm).

### (Exemplary embodiment 6)

The test was performed in the same manner as in Exemplary embodiment 1 except for the following points. A difference from Exemplary embodiment 1 is that the first surface roughness (Ra) is 0.50 µm, and the second surface roughness (Ra) is 0.55 µm. Therefore, the difference between the first surface roughness and the second surface roughness is 0.05 µm. Further, the ratio of the second diameter to the first diameter is 1 or more (specifically, the first diameter is 100 mm, and the second diameter is 100 mm). Further, the second surface roughness is less than 1/5 of the gap between the first roll and the second roll (specifically, the gap between the two rolls is 100 µm). Further, the ratio of the second circumferential speed to the first circumferential speed is 1 or more (specifically, the first circumferential speed is 5 m/minute, and the second circumferential speed is 5 m/min).

### (Exemplary embodiment 7)

The test was performed in the same manner as in Exemplary embodiment 1 except for the following points. A difference from Exemplary embodiment 1 is that the first surface roughness (Ra) is 0.5 µm, and the second surface roughness (Ra) is 2.5 µm. Therefore, the difference between the first surface roughness and the second surface roughness is 2 µm. Further, the ratio of the second diameter to the first diameter is 1 or more (specifically, the first diameter is 70 mm, and the second diameter is 100 mm). Further, the second surface roughness is less than 1/5 of the gap between the first roll and the second roll (specifically, the gap between the two rolls is 100 µm). Further, the ratio of the second circumferential speed to the first circumferential speed is 1 or more (specifically, the first circumferential speed is 5 m/minute, and the second circumferential speed is 6 m/min).

### (Comparative example 1)

The test was performed in the same manner as in Exemplary embodiment 1 except for the following points. A difference from Exemplary embodiment 1 is that the first surface roughness (Ra) is 0.005 µm, and the second surface roughness (Ra) is 0.005 µm. Therefore, the difference between the first surface roughness and the second surface roughness is 0 µm. Further, the ratio of the second diameter to the first diameter is 1 or more (specifically, the first diameter is 70 mm, and the second diameter is 100 mm). Further, the second surface roughness is less than 1/5 of the gap between the first roll and the second roll (specifically, the gap between the two rolls is 30 µm). Further, the ratio of the second circumferential speed to the first circumferential speed is 1 or more (specifically, the first circumferential speed is 5 m/minute, and the second circumferential speed is 6 m/min).

### (Comparative example 2)

The test was performed in the same manner as in Exemplary embodiment 1 except for the following points. A difference from Exemplary embodiment 1 is that the first surface roughness (Ra) is 0.50 µm, and the second surface roughness (Ra) is 0.4 µm. Therefore, the first surface roughness is 0.1 µm smaller than the second surface roughness. Further, the ratio of the second diameter to the first diameter is 1 or more (specifically, the first diameter is 70 mm, and the second diameter is 100 mm). Further, the second surface roughness is less than 1/5 of the gap between the first roll and the second roll (specifically, the gap between the two rolls is 300 µm). Further, the ratio of the second circumferential speed to the first circumferential speed is 1 or more (specifically, the first circumferential speed is 5 m/minute, and the second circumferential speed is 6 m/min).

The transferability of the compound sheet was visually evaluated for the conveyer apparatus according to each exemplary embodiment and each comparative example. In the evaluation of transferability, successful transfer of the compound sheet to the second circumferential surface was evaluated as "A", and failure to transfer was evaluated as "B". In addition, the stretchability of the compound sheet was evaluated. In the evaluation of stretchability, the thickness of the compound sheet on the second circumferential surface being less than the gap between the first roll and the second roll was evaluated as "AA", the thickness being equivalent to the gap was evaluated as "A", and a fracture in the compound sheet being visually identified was evaluated as "B". The thickness of the compound sheet was defined as the average thickness, which is an average value of the thickness at any 10 points. Further, the moldability of the compound sheet was visually evaluated on the second circumferential surface. In the evaluation of moldability, absence of cracks or damages at the edge in the width direction of the compound sheet was evaluated as "AA", cracks or damages acceptable in a compound sheet being identified was evaluated as "A", and cracks or damages not acceptable in a compound sheet being identified was evaluated as "B".

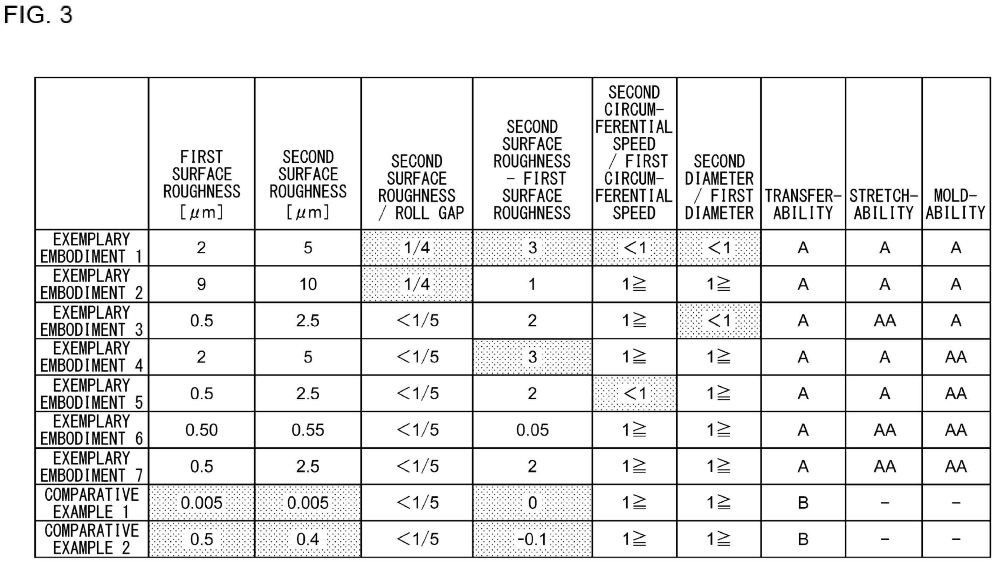

Fig. 3 shows conditions and evaluation results in the transport apparatus according to each embodiment and each comparative example. As shown in Fig. 3, transferability was favorable in Exemplary embodiment 1, in which the second surface roughness is greater than the first surface roughness. In Comparative example 1, in which the second surface roughness is equal to the first surface roughness, and in Comparative example 2, in which the second surface roughness is smaller than the first surface roughness, on the other hand, the compound sheet could not be transferred to the second roll. It was confirmed from this that the transferability of the compound sheet and, ultimately, the conveyance stability can be improved by configuring the second surface roughness to be greater than the first surface roughness. In Comparative examples 1 and 2, the compound sheet could not be transferred to the second roll so that the stretchability and moldability could not be evaluated.

Further, improvement in stretchability and moldability over Exemplary embodiment 1 was observed in Exemplary embodiments 6 and 7, in which not only the second surface roughness is greater than the first surface roughness but also the second surface roughness is less than 1/5 (<1/5) of the gap between the first roll and the second roll, the difference in surface roughness is 0.05 µm or more and 2 µm or less, the second circumferential speed is equal to or greater than the first circumferential speed (1≥), and the second diameter is equal to or greater than the first diameter (1≥).

Further, the stretchability and moldability were reduced compared to Exemplary embodiments 6 and 7 in Exemplary embodiment 2, which differs from Exemplary embodiments 6 and 7 in that the second surface roughness is 1/5 or more (1/4) of the gap between the first roll and the second roll. It was confirmed from this that the stretchability and moldability of the compound sheet can be improved by configuring the second surface roughness to be less than 1/5 of the gap between the first roll and the second roll.

Further, the moldability was reduced compared to Exemplary embodiments 6 and 7 in Exemplary embodiment 3, which differs from Exemplary embodiments 6 and 7 in that the second diameter is less than the first diameter (<1). It was confirmed from this that the moldability of the compound sheet can be improved by configuring the second diameter to be equal to or greater than the first diameter.

Further, the stretchability is reduced compared to Exemplary embodiments 6 and 7 in Exemplary embodiment 4, which differs from Exemplary embodiments 6 and 7 in that the surface roughness difference is outside the range of 0.05 µm or more and 2 µm or less. It was confirmed from this that the stretchability of the compound sheet can be improved by configuring the difference between the first surface roughness and the second surface roughness to be 0.05 µm or more and 2 µm or less.

Further, the stretchability was reduced compared to Exemplary embodiments 6 and 7 in Exemplary embodiment 5, which differs from Exemplary embodiments 6 and 7 in that the second circumferential speed is less than the first circumferential speed (<1). It was confirmed from this that the stretchability of the compound sheet can be improved by configuring the second circumferential speed to be equal to or higher than the first circumferential speed.

### INDUSTRIAL APPLICABILITY

The present disclosure can be used in a conveyer apparatus for a compound sheet.

### REFERENCE SIGNS LIST

1 conveyer apparatus, 2 first roll, 2a first circumferential surface, 4 second roll, 4a second circumferential surface, 6 compound sheet, 8 dry electrode compound

## Claims

1. A conveyer apparatus for a compound sheet, comprising:
a first roll and a second roll that convey a compound sheet obtained by molding a dry electrode compound into a sheet shape, by sandwiching the compound sheet between the first roll and the second roll and rotating,
wherein a first circumferential surface of the first roll has a first surface roughness,
wherein a second circumferential surface of the second roll has a second surface roughness greater than the first surface roughness, and
wherein the second roll is disposed further downstream in a conveying direction of the compound sheet than the first roll, and the compound sheet passing through a gap between the first roll and the second roll is supported and conveyed by the second circumferential surface.

2. The conveyer apparatus according to Claim 1,
wherein the second surface roughness is less than 1/5 of the gap between the first roll and the second roll.

3. The conveyer apparatus according to Claim 1 or 2,
wherein a difference between the first surface roughness and the second surface roughness is 0.05 µm or more and 2 µm or less.

4. The conveyer apparatus according to Claim 1 or 2,
wherein the first roll rotates at a first circumferential speed, and
wherein the second roll rotates at a second circumferential speed equal to or faster than the first circumferential speed.

5. The conveyer apparatus according to Claim 1 or 2,
wherein the first roll has a first diameter, and
wherein the second roll has a second diameter equal to or greater than the first diameter.
